# EUROPÄISCHE PATENTSCHRIFT

(11) **EP 2 588 743 B1**
(45) Veröffentlichungstag und Bekanntmachung des Hinweises auf die Patenterteilung: **23.08.2017**
(21) Anmeldenummer: 11729941.2
(22) Anmeldetag: 20.06.2011
(51) Int. Cl.: F02N 11/10, F02N 11/08

(54) **VERFAHREN ZUM BETREIBEN EINER TEMPERATURBEGRENZUNGSEINRICHTUNG, TEMPERATURBEGRENZUNGSEINRICHTUNG SOWIE ELEKTRISCHES GERÄT**
METHOD FOR OPERATING A TEMPERATURE-LIMITING DEVICE, TEMPERATURE-LIMITING DEVICE AND ELECTRICAL APPARATUS
PROCÉDÉ PERMETTANT DE FAIRE FONCTIONNER UN DISPOSITIF DE LIMITATION DE TEMPÉRATURE, DISPOSITIF DE LIMITATION DE TEMPÉRATURE ET APPAREIL ÉLECTRIQUE

(30) Priorität: 01.07.2010 DE 102010030830
(43) Veröffentlichungstag der Anmeldung: 08.05.2013
(73) Patentinhaber: Robert Bosch GmbH, 70442 Stuttgart (DE)
(72) Erfinder: TUMBACK, Stefan, 70469 Stuttgart (DE)
(86) Internationale Anmeldenummer: PCT/EP2011/060214
(87) Internationale Veröffentlichungsnummer: WO 2012/000819

(56) Entgegenhaltungen:
- EP-A2- 1 580 424
- WO-A1-2006/125872
- DE-A1- 10 053 750
- DE-A1- 19 925 872
- US-A1- 2008 172 170

## Beschreibung

### Stand der Technik

Die Erfindung betrifft ein Verfahren zum Betreiben einer Temperaturbegrenzungseinrichtung eines mittels eines Aktivierungssignals über einen begrenzten Zeitabschnitt aktivierbaren elektrischen Geräts. Die Erfindung betrifft weiterhin eine Temperaturbegrenzungseinrichtung sowie ein elektrisches Gerät.

Verfahren der eingangs genannten Art sind aus dem Stand der Technik bekannt. Die Temperaturbegrenzungseinrichtung ist üblicherweise dem elektrischen Gerät zugeordnet. Die Temperaturbegrenzungseinrichtung dient dabei dazu, eine Aktivierung des elektrischen Geräts bei Auftreten des Aktivierungssignals nur dann zuzulassen, wenn die Temperatur des elektrischen Geräts beziehungsweise eine geschätzte Temperatur des elektrischen Geräts unterhalb einer bestimmten Temperatur, insbesondere einer Grenzbetriebstemperatur des elektrischen Geräts, liegt. Das bedeutet, dass die Temperaturbegrenzungseinrichtung dazu dient, die Temperatur des elektrischen Geräts derart zu begrenzen, dass keine temperaturbedingte Beschädigung des elektrischen Geräts beziehungsweise eine Reduzierung von dessen Lebensdauer auftreten kann. Das elektrische Gerät wird beispielsweise derart betrieben, dass es zunächst deaktiviert ist, bei Auftreten des Aktivierungssignals lediglich kurzzeitig, also über den begrenzten Zeitabschnitt, aktiviert und anschließend wieder deaktiviert wird. Das elektrische Gerät kann insbesondere eine Startereinrichtung eines Kraftfahrzeugs sein, dient also dem Starten einer Brennkraftmaschine des Kraftfahrzeugs. Bei dem Auftreten des Aktivierungssignals wird demnach das elektrische Gerät beziehungsweise die Startereinrichtung dazu betrieben, die Brennkraftmaschine auf eine vorbestimmt Drehzahl zu bringen und somit zu starten. Nachfolgend wird das elektrische Gerät wieder deaktiviert und beispielsweise als Generator betrieben. Während das elektrische Gerät aktiviert ist, erzeugt es Wärme, welche seine Temperatur erhöht. Wird das elektrische Gerät über einen zu langen Zeitabschnitt aktiviert oder zu häufig innerhalb eines bestimmten Zeitraums aktiviert, so kann die Temperatur des elektrischen Geräts größer werden als die Grenzbetriebstemperatur. Dies kann, wie bereits vorstehend ausgeführt, zu einer Beschädigung des elektrischen Geräts führen.

Aus der DE 199 46 808 A1 ist beispielsweise eine elektrische Startervorrichtung für eine Brennkraftmaschine bekannt. Die elektrische Startervorrichtung verfügt über einen thermischen Überwachungsschutz für das Außerbetriebsetzen der Startervorrichtung bei Erreichen ihrer Grenzbetriebstemperatur. Die Startervorrichtung weist dabei eine Einrichtung zur Ermittlung einer virtuellen Betriebstemperatur auf, wobei die Einrichtung die virtuelle Betriebstemperatur in Abhängigkeit zumindest eines die Betriebstemperatur der Startervorrichtung beeinflussenden Betriebsparameters ermittelt. Die virtuelle Betriebstemperatur wird beispielsweise in Abhängigkeit eines Stromverhältnisses ermittelt, welches einen tatsächlichen Starterstrom zu einem Referenzstrom in Bezug setzt. Der Referenzstrom ist dabei insbesondere ein Nennstrom der Startervorrichtung. Anschließend wird aus dem Stromverhältnis durch Integration die virtuelle Betriebstemperatur berechnet. Um die virtuelle Betriebstemperatur möglichst genau zu bestimmen, muss die Integration mit einem kleinen Zeitintervall erfolgen. Derartige Startervorrichtungen führen demnach permanent vergleichsweise komplexe Berechnungen durch, um die virtuelle Betriebstemperatur der Startervorrichtung zu bestimmen und sie bei Erreichen ihrer Grenzbetriebstemperatur außer Betrieb zu setzen. Die zum Ausführen dieser Berechnungen notwendige Berechnungseinheit ist jedoch kostenaufwändig.

Aus der DE 100 53 750 A1 ist ein Zähler bekannt, der durch ein Aktivierungs-Anforderungssignal inkrementiert und über die Zeit nach der letzten Aktivierung dekrementiert wird. Nach dem Zählerstand wird dann im Vergleich mit einem festen Schwellwert entschieden, ob ein Aktuator tatsächlich angesteuert wird.

### Offenbarung der Erfindung

Das Verfahren zum Betreiben einer Temperaturbegrenzungseinrichtung mit den Merkmalen des Anspruchs 1 weist dagegen den Vorteil auf, dass es sehr einfach und kostengünstig umsetzbar ist. Dies wird erfindungsgemäß erreicht, indem die Temperaturbegrenzungseinrichtung das Aktivieren des elektrischen Geräts bei Auftreten des Aktivierungssignals nur zulässt, wenn ein Zählerwert kleiner bzw. größer als ein Referenzwert ist, wobei der Zählerwert bei jedem Aktivieren des elektrischen Geräts mit einem bestimmten Temperaturäquivalenzwert inkrementiert bzw. dekrementiert wird. Es müssen demnach keine komplexen Berechnungen oder aufwändige Messungen durchgeführt werden. Es ist lediglich das Inkrementieren beziehungsweise Dekrementieren des Zählerwerts mit dem Temperaturäquivalenzwert und ein Vergleichen des Zählerwerts mit dem Referenzwert vorgesehen. Beispielsweise wird der Zählerwert zu Beginn eines Betreibens des elektrischen Geräts beziehungsweise der Temperaturbegrenzungseinrichtung auf einen Ausgangswert zurückgesetzt. Dieser Ausgangswert ist üblicherweise unterschiedlich von dem Referenzwert. Der Zählerwert stellt also ein Maß für die Temperatur des elektrischen Geräts dar. Die Ausgestaltung dieses Zählerwerts ist dabei flexibel. Ein großer Zählerwert kann einer hohen Temperatur entsprechen und ein kleiner Zählerwert einer niedrigen Temperatur bzw. ein kleiner Zählerwert kann einer hohen Temperatur entsprechen und ein großer Zählerwert einer niedrigen Temperatur. Dies wird durch die Ausführungsformen des Inkrementierens bzw. Dekrementierens mit dem Temperaturäquivalenzwert erreicht. Die Bedingung, dass das Aktivieren des elektrischen Geräts nur zugelassen wird, wenn der Zählerwert kleiner bzw. größer als der Referenzwert ist, muss dementsprechend konsistent gewählt werden: Entspricht ein großer Zählerwert einer hohen Temperatur, so ist die vorgenannte Bedingung als "kleiner" zu formulieren, entspricht ein kleiner Zählerwert einer niedrigen Temperatur, so ist die vorgenannte Bedingung als "größer" zu formulieren. Es kann dabei vorgesehen sein, den Ausgangswert in Abhängigkeit mindestens einer bestimmten Größe zu setzen. Zum Bestimmen der Größe wird beispielsweise eine Messung oder eine Berechnung durchgeführt. Die bestimmte Größe kann zum Beispiel die Umgebungstemperatur, die Ansauglufttemperatur von der Brennkraftmaschine angesaugter Luft, die Öltemperatur von Öl der Brennkraftmaschine oder die Aggregattemperatur zumindest eines Aggregats im Bereich der Brennkraftmaschine, insbesondere im Motorraum, sein.

Tritt während des Betreibens des elektrischen Geräts beziehungsweise der Temperaturbegrenzungseinrichtung das Aktivierungssignals auf, so wird der Zählerwert mit dem Referenzwert verglichen. Lediglich wenn der Zählerwert kleiner bzw. größer als der Referenzwert ist, wird das elektrische Gerät aktiviert beziehungsweise das Aktivieren zugelassen. Anschließend wird der Zählerwert mit dem bestimmten Temperaturäquivalenzwert inkrementiert bzw. dekrementiert. Alternativ kann es selbstverständlich auch vorgesehen sein, den Zählerwert bei Auftreten des Aktivierungssignals aber vor dem Aktivieren des elektrischen Geräts zu inkrementieren beziehungsweise dekrementieren. In diesem Fall wird erst nach dem Inkrementieren beziehungsweise Dekrementieren der Zählerwert mit dem Referenzwert verglichen. Auf diese Weise wird die Häufigkeit des Aktivierens des elektrischen Geräts innerhalb eines bestimmten Zeitraums begrenzt, so dass ein Ansteigen der Temperatur des elektrischen Geräts auf eine Temperatur größer als dessen Grenzbetriebstemperatur vermieden wird. Das Inkrementieren beziehungsweise Dekrementieren mit dem bestimmten Temperaturäquivalenzwert erfolgt üblicherweise nur dann, wenn das Aktivierungssignal auftritt beziehungsweise nur bei dem Aktivieren des elektrischen Geräts, und auch dann nur einmalig, insbesondere nicht permanent. Der Temperaturäquivalenzwert ist besonders bevorzugt ein vorbestimmter Wert, der, insbesondere in der Temperaturbegrenzungseinrichtung, hinterlegt ist. Es kann vorgesehen sein, dass der Temperaturäquivalenzwert in Abhängigkeit der bestimmten Größe, also beispielsweise die Umgebungstemperatur, die Ansauglufttemperatur, die Öltemperatur oder die Aggregattemperatur, bestimmt wird. Alternativ kann die bestimmte Größe auch die Fahrzeuggeschwindigkeit des Kraftfahrzeugs sein. Ebenso kann es vorgesehen sein, dass eine Kombination der genannten Größen verwendet wird, also der Temperaturäquivalenzwert aus zumindest zwei der Größen bestimmt wird.

Durch das Verwenden des Zählers wird demnach auf sehr einfache Weise eine Beschädigung des elektrischen Geräts durch Überhitzung effektiv vermieden. Ist das elektrische Gerät die Startereinrichtung des Kraftfahrzeugs, so wird beispielsweise bei Aktivierung der Zündung der Zählerwert auf den Ausgangswert gesetzt. Gibt ein Fahrer des Kraftfahrzeugs die Anweisung zur Betätigung der Startereinrichtung, so wird das Aktivierungssignal an das elektrische Gerät übermittelt. Startet die Brennkraftmaschine bei dem darauf folgenden Aktivieren des elektrischen Geräts nicht, so kann der Fahrer ein Aktivieren des elektrischen Geräts lediglich so lange bewirken, bis der Zählerwert größer oder kleiner als der Referenzwert ist. Anschließend muss der Fahrer, um erneut die Startereinrichtung aktivieren zu können, die Zündung deaktivieren und wieder aktivieren, um den Zählerwert auf den Ausgangswert zurückzusetzen. Er kann demnach nicht beliebig häufig ohne Unterbrechung das elektrische Gerät aktivieren, womit die Überhitzung verhindert wird. Die Temperaturbegrenzungseinrichtung oder das elektrische Gerät können zusätzlich über eine Einrichtung verfügen, welche das Aktivieren des elektrischen Geräts lediglich über den begrenzten Zeitabschnitt zulässt. Es ist demnach kein Dauerbetrieb des elektrischen Geräts möglich, welches auch bei geringer Aktivierungshäufigkeit zu dem Überhitzung führen könnte. Die Einrichtung sorgt beispielsweise für ein Deaktivieren des elektrischen Geräts nach Ablauf des bestimmten Zeitabschnitts. Die Erfindung sieht vor, dass der Zählerwert, insbesondere während das elektrische Gerät nicht aktiviert ist, mit einer bestimmten Dekrementierrate dekrementiert oder mit einer bestimmten Inkrementierrate inkrementiert wird. Das "Dekrementieren" entspricht hierbei der Ausführungsform, in der ein großer Zählerwert einer hohen Temperatur des elektrischen Geräts entspricht, das "Inkrementieren" entspricht der Ausführungsform, in der ein kleiner Zählerwert einer hohen Temperatur des elektrischen Geräts entspricht. Allgemein ausgedrückt wird also der Zählerwert mit einer bestimmten Änderungsrate (nämlich einer Dekrementierrate oder Inkrementierrate) geändert (also dekrementiert bzw. inkrementiert), während das elektrische Gerät nicht aktiviert ist. Mit dem Dekrementieren beziehungsweise Inkrementieren wird eine Abkühlung des elektrischen Geräts simuliert. Die Dekrementierrate beziehungsweise Inkrementierrate beschreibt dabei eine Reduzierung beziehungsweise Vergrößerung des Zählerwerts in einem bestimmten Zeitraum. Die Dekrementierrate beziehungsweise die Inkrementierrate weist demnach beispielsweise die Einheit [1/s] auf. Alternativ kann jedoch auch eine Zeiteinheit - beispielsweise [s] - vorgesehen sein. In diesem Fall gibt die Dekrementierrate beziehungsweise Inkrementierrate die Zeit an, nach deren Verstreichen der Zählerwert um einen vorbestimmten Wert, insbesondere 1, dekrementiert beziehungsweise inkrementiert wird. Das Dekrementieren ist vorteilhafterweise vorgesehen, wenn der Zählerwert bei jedem Aktivieren des elektrischen Geräts mit dem Temperaturäquivalenzwert inkrementiert wird. Soll der Zählerwert dagegen dekrementiert werden, so muss der Zählerwert mit der bestimmten Inkrementierrate inkrementiert werden. Das Dekrementieren beziehungsweise Inkrementieren erfolgt mit Vorteil nur, während das elektrische Gerät nicht aktiviert ist. Wenn das elektrische Gerät aktiviert ist, erzeugt es Wärme, welche die Temperatur des elektrischen Geräts erhöht. Es findet demnach keine Abkühlung, sondern vielmehr eine Aufheizung statt. Weil mit der Dekrementierrate beziehungsweise Inkrementierrate ein Abkühlen des elektrischen Geräts simuliert werden soll, ist es demnach sinnvoll, das Dekrementieren beziehungsweise Inkrementieren nur durchzuführen, während das elektrische Gerät nicht aktiviert ist. Die Dekrementierrate oder die Inkrementierrate kann in einer bevorzugten Ausgestaltung der Erfindung in Abhängigkeit von der bestimmten Größe, also beispielsweise der Umgebungstemperatur, der Ansauglufttemperatur, der Öltemperatur, der Aggregattemperatur oder der Fahrzeuggeschwindigkeit, bestimmt werden. Weiterhin sieht die Erfindung vor, dass der Referenzwert in Abhängigkeit von dem Zählerwert festgelegt wird. Es kann demnach vorgesehen sein, den Referenzwert zu modifizieren, sobald der Zählerwert bestimmte Werte annimmt. Auf diese Weise kann beispielsweise eine Hysterese beziehungsweise ein hystereseartiges Verhalten der Temperaturbegrenzungseinrichtung erzielt werden. Beispielsweise kann der Referenzwert ausgehend von dem normalerweise verwendeten Referenzwert größer gewählt werden, wenn das elektrische Gerät vergleichsweise selten aktiviert wird. Dagegen wird der Referenzwert ausgehend von dem normalerweise verwendeten Referenzwert verringert, wenn das Aktivieren des elektrischen Geräts häufig erfolgt. Weiterhin sieht die Erfindung vor, dass der Referenzwert bei einem Unterschreiten eines Minimalwerts durch den Zählerwert auf einen ersten Referenzwert gesetzt wird. Dies ist insbesondere dann vorgesehen, wenn der Zählerwert bei jedem Aktivieren des elektrischen Geräts mit dem Temperaturäquivalenzwert inkrementiert und mit der Dekrementierrate dekrementiert wird. Solange der Zählerwert unterhalb des Minimalwerts liegt beziehungsweise diesen unterschreitet, soll der Referenzwert demnach dem ersten Referenzwert entsprechen. Der erste Referenzwert ist beispielsweise ein vorgegebener Wert. Weiterhin sieht die Erfindung vor, dass der Referenzwert bei einem Überschreiten eines Maximalwerts durch den Zählerwert auf einen zweiten Referenzwert gesetzt wird, wobei der zweite Referenzwert insbesondere kleiner ist als der erste Referenzwert. Solange der Zählerwert also größer ist als der Maximalwert beziehungsweise diesen überschreitet, entspricht der Referenzwert dem zweiten Referenzwert. Dabei ist es vorteilhaft, wenn der zweite Referenzwert kleiner ist als der erste Referenzwert. Auf diese Weise wird ein hystereseartiges Verhalten der Temperaturbegrenzungseinrichtung erzielt. Der zweite Referenzwert ist dabei vorzugsweise derart gewählt, dass bei dem Überschreiten des Maximalwerts durch den Zählerwert das Aktivieren des elektrischen Geräts von der Temperaturbegrenzungseinrichtung nicht mehr zugelassen wird. Erst wenn der Zählerwert auf den Minimalwert abgesunken ist beziehungsweise diesen unterschreitet, soll der Referenzwert wieder derart gewählt werden, dass das Aktivieren des elektrischen Geräts möglich ist, sobald das Aktivierungssignal auftritt. Beispielsweise entspricht dabei der Minimalwert dem zweiten Referenzwert und der Maximalwert dem ersten Referenzwert. Dies beschreibt das Ausführungsbeispiel, bei dem ein großer Zählerwert hohen Temperaturen entspricht. Wird der Zählerwert hingegen derart gewählt, dass ein großer Zählerwert niedrigen Temperaturen entspricht, so ist zur Ausbildung des hystereseartigen Verhaltens selbstverständlich das Vorzeichen in allen Vergleichen zu invertieren, d.h. Minimalwert und Maximalwert müssen vertauscht werden, ebenso wie Vergleiche "größer" und "kleiner". Außerdem ist der dann selbstverständlich der zweite Referenzwert größer als der erste Referenzwert zu wählen. Der Minimalwert kann jedoch auch unabhängig von dem zweiten Referenzwert beziehungsweise der Maximalwert unabhängig von dem ersten Referenzwert gewählt werden.

Eine Weiterbildung der Erfindung sieht vor, dass der Temperaturäquivalenzwert einer durch das Aktivieren des elektrischen Geräts erzeugten, insbesondere mittleren, Temperaturerhöhung des elektrischen Geräts und/oder die Dekrementierrate einer Abkühlrate des elektrischen Geräts im Wesentlichen entsprechen. Die Temperaturbegrenzungseinrichtung kann somit lediglich dazu vorgesehen sein, nur eine bestimmte Anzahl an Aktivierungen des elektrischen Geräts pro Zeiteinheit zuzulassen. Besonders vorteilhaft ist es jedoch, wenn mit dem Zählerwert zumindest näherungsweise die tatsächliche Temperatur des elektrischen Geräts abgebildet wird. Zu diesem Zweck entspricht der Temperaturäquivalenzwert der Temperaturerhöhung, welche bei dem Aktivieren des elektrischen Geräts zu erwarten ist. Beispielsweise ist dabei die mittlere, bei unterschiedlichen Umgebungsbedingungen auftretende Temperaturerhöhung in der Temperaturbegrenzungseinrichtung hinterlegt. Zusätzlich oder alternativ kann selbstverständlich auch die Dekrementierrate der Abkühlrate des elektrischen Geräts im Wesentlichen entsprechen, wobei vorteilhafterweise die mittlere, unter unterschiedlichen Umgebungsbedingungen auftretende Dekrementierrate ebenfalls hinterlegt ist.

Der Zählerwert, der Temperaturäquivalenzwert und die Dekrementierrate sind dabei üblicherweise nicht die tatsächliche Temperatur des elektrischen Geräts, sondern lediglich eine normierte beziehungsweise dimensionslose Temperatur, welche beispielsweise auf eine Referenztemperatur bezogen ist. Die Referenztemperatur kann dabei ein vorbestimmter beziehungsweise festgelegter Wert sein beziehungsweise in Abhängigkeit von zumindest einer, insbesondere gemessenen, Umgebungszustandsgröße bestimmt werden. Auf diese Weise ist neben dem Schutz des elektrischen Geräts vor dem Auftreten einer zu hohen Temperatur eine zumindest näherungsweise Aussage über die aktuelle Temperatur des elektrischen Geräts möglich.

Eine Weiterbildung der Erfindung sieht vor, dass der Temperaturäquivalenzwert, die Dekrementierrate, die Inkrementierrate und/oder der Referenzwert in Abhängigkeit von zumindest einer, insbesondere gemessenen, Umgebungszustandsgröße und/oder eines Fahrzustands bestimmt werden. In einer einfachen Ausführungsform des Verfahrens zum Betreiben der Temperaturbegrenzungseinrichtung sind für die vorstehend genannten Werte beziehungsweise Raten vorbestimmte Werte beziehungsweise vorbestimmte Raten vorgesehen. In einer besonders vorteilhaften Ausgestaltung ist es jedoch vorgesehen, die Werte beziehungsweise Raten auf die zumindest eine Umgebungszustandsgröße abzustimmen. Die Umgebungszustandsgröße ist dabei beispielsweise die Temperatur, welche vorzugsweise mittels einer Messeinrichtung gemessen wird. So kann beispielsweise bei einer hohen Umgebungstemperatur der Temperaturäquivalenzwert größer und/oder die Dekrementierrate, die Inkrementierrate und/oder der Referenzwert kleiner gewählt werden. Auf diese Weise ist es möglich, das erfindungsgemäße Verfahren auf die veränderte Umgebungszustandsgröße abzustimmen und auch beispielsweise bei hohen Umgebungstemperaturen ein Überhitzen des elektrischen Geräts zu verhindern. Zusätzlich oder alternativ kann es selbstständig auch vorgesehen sein, den ersten und/oder den zweiten Referenzwert in Abhängigkeit von der zumindest einen Umgebungszustandsgröße zu bestimmen. Wie vorstehend bereits ausgeführt, kann die Umgebungszustandsgröße die Umgebungstemperatur, aber alternativ auch die Ansauglufttemperatur, die Öltemperatur oder die Aggregattemperatur, sein. In einer weiteren Ausführungsform der Erfindung kann der Temperaturäquivalenzwert, die Dekrementierrate, die Inkrementierrate und/oder der Referenzwert zusätzlich oder alternativ zu der Umgebungszustandsgröße in Abhängigkeit von dem Fahrzustand, insbesondere der Fahrzeuggeschwindigkeit, bestimmt werden.

Eine Weiterbildung der Erfindung sieht vor, dass als elektrisches Gerät eine Startereinrichtung eines Kraftfahrzeugs, insbesondere ein Startergenerator, verwendet wird. Das elektrische Gerät dient demnach dem Starten einer Brennkraftmaschine des Kraftfahrzeugs. Besonders vorteilhaft ist es, wenn das elektrische Gerät als Startergenerator ausgebildet ist, also nach dem Aktivieren zum Starten der Brennkraftmaschine als Generator verwendbar ist.

Die Erfindung betrifft weiterhin eine Temperaturbegrenzungseinrichtung, insbesondere zur Durchführung des vorstehend beschriebenen Verfahrens. Die Temperaturbegrenzungseinrichtung ist dabei einem mittels eines Aktivierungssignals über einen begrenzten Zeitabschnitt aktivierbaren elektrischen Gerät zugeordnet. Dabei ist vorgesehen, dass die Temperaturbegrenzungseinrichtung das Aktivieren des elektrischen Geräts bei Auftreten des Aktivierungssignals nur zulässt, wenn ein Zählerwert größer oder kleiner als ein Referenzwert ist, wobei die Temperaturbegrenzungseinrichtung den Zählerwert bei jedem Aktivieren des elektrischen Geräts mit einem bestimmten Temperaturäquivalenzwert inkrementiert oder dekrementiert. Die Temperaturbegrenzungseinrichtung kann gemäß den vorstehenden Ausführungen weitergebildet sein.

Die Erfindung betrifft zudem ein elektrisches Gerät, insbesondere Startereinrichtung eines Kraftfahrzeugs, mit einer Temperaturbegrenzungseinrichtung, insbesondere gemäß den vorstehenden Ausführungen und/oder zur Durchführung des Verfahrens gemäß den vorstehenden Ausführungen, wobei das elektrische Gerät mittels eines Aktivierungssignals über einen begrenzten Zeitabschnitt aktivierbar ist. Dabei ist vorgesehen, dass die Temperaturbegrenzungseinrichtung das Aktivieren des elektrischen Geräts bei Auftreten des Aktivierungssignals nur zulässt, wenn ein Zählerwert größer oder kleiner als ein Referenzwert ist, wobei die Temperaturbegrenzungseinrichtung den Zählerwert bei jedem Aktivieren des elektrischen Geräts mit einem bestimmten Temperaturäquivalenzwert inkrementiert oder dekrementiert. Das elektrische Gerät kann gemäß den vorstehenden Ausführungen weitergebildet sein.

Die Erfindung wird nachfolgend anhand der in der Zeichnung dargestellten Ausführungsbeispiele näher erläutert, ohne dass eine Beschränkung der Erfindung erfolgt. Dabei zeigen:
Figur 1 eine schematische Darstellung eines elektrischen Geräts mit einer Temperaturbegrenzungseinrichtung,
Figur 2 eine schematische Darstellung einer Berechnungsvorschrift eines Verfahrens zum Betreiben einer Temperaturbegrenzungseinrichtung zum Inkrementieren eines Zählerwerts bei Auftreten eines Aktivierungssignals für ein elektrisches Gerät,
Figur 3 eine schematische Darstellung einer Berechnungsvorschrift des Verfahrens zum Dekrementieren des Zählerwerts mit einer bestimmten Dekrementierrate, und
Figur 4 eine schematische Darstellung einer Auswertung des Zählerwerts, um zu bestimmen, ob ein Aktivieren des elektrischen Geräts zugelassen werden soll.

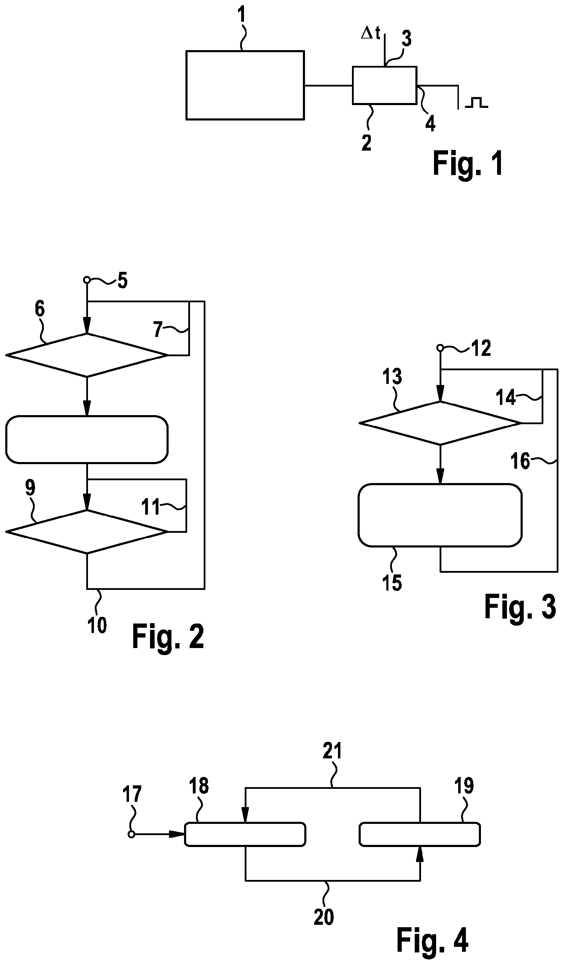

Die Figur 1 zeigt eine schematische Ansicht eines elektrischen Geräts 1 mit einer Temperaturbegrenzungseinrichtung 2. Die Temperaturbegrenzungseinrichtung 2 ist dazu vorgesehen, während eines Betreibens des elektrischen Geräts 1 ein Überhitzen des Geräts 1 zu verhindern. Der Temperaturbegrenzungseinrichtung 2 ist über einen Eingang 3 ein Zeitsignal und über einen Eingang 4 ein Aktivierungssignal zuführbar. Das elektrische Gerät 1 ist beispielsweise eine Startereinrichtung eines Kraftfahrzeugs und ist demnach über einen begrenzten Zeitabschnitt aktivierbar, um die Brennkraftmaschine des Kraftfahrzeugs auf eine bestimmte Drehzahl zu bringen und damit zu starten. Das Aktivieren des elektrischen Geräts 1 erfolgt mittels des Aktivierungssignals. Die Temperaturbegrenzungseinrichtung 2 lässt jedoch das Aktivieren des elektrischen Geräts 1 bei Auftreten oder Vorliegen des Aktivierungssignals nur dann zu, wenn ein Zählerwert größer ist als ein Referenzwert. Der Zählerwert wird bei jedem Aktiveren des elektrischen Geräts 1 mit einem bestimmten Temperaturäquivalenzwert inkrementiert. Zusätzlich soll der Zählerwert mit einer bestimmten Dekrementierrate dekrementiert werden. Dies erfolgt permanent, vorzugsweise jedoch nur, wenn das elektrische Gerät 1 nicht aktiviert ist. Auf diese Weise bildet der Zählerwert zumindest näherungsweise die tatsächliche Temperatur des elektrischen Geräts 1 ab. Für das Dekrementieren wird der Temperaturbegrenzungseinrichtung 2 das Zeitsignal zugeführt. Beispielsweise ist es vorgesehen, dass der Zählerwert nach einer bestimmten Anzahl an aufgetretenen Zeitsignalen um einen vorbestimmten, durch die Dekrementierrate bestimmten Wert reduziert wird.

Die Figur 2 zeigt eine schematische Darstellung einer Berechnungsvorschrift eines Verfahrens zum Betreiben der Temperaturbegrenzungseinrichtung 2. Die Berechnungsvorschrift betrifft dabei ein Inkrementieren eines Zählerwerts bei Auftreten des Aktivierungssignals für das elektrische Gerät 1. Die Berechnungsvorschrift weist einen Start 5 auf, auf welchen eine Abfrage 6 folgt. Mit der Abfrage 6 wird festgestellt, ob ein Aktivierungssignal eines elektrischen Geräts 1 vorliegt. Ist dies nicht der Fall, so wird gemäß eines Pfades 7 verzweigt und die Abfrage 6 erneut durchgeführt. Liegt dagegen das Aktivierungssignal vor, so wird ein Befehl 8 zum Inkrementieren des Zählerwerts ausgeführt. Das Inkrementieren des Zählerwerts erfolgt dabei mit dem bestimmten Temperaturäquivalenzwert.

Vorzugsweise wird bei dem Inkrementieren der Wertebereich des Zählerwerts beachtet, so dass ein Überlaufen verhindert wird. Ein solches Überlaufen könnte ansonsten in einen fehlerhaften Zählerwert resultieren und die Funktion der Temperaturbegrenzungseinrichtung 2 beeinträchtigen. Dabei wird zunächst überprüft, ob der Zählerwert größer als ein maximal möglicher Zählerwert abzüglich des Temperaturäquivalenzwerts ist. Ist dies nicht der Fall, so wird der Zählerwert mit dem Temperaturäquivalenzwert inkrementiert. Ist dagegen der Zählerwert größer als der maximal mögliche Zählerwert minus dem Temperaturäquivalenzwert, so wird der Zählerwert auf den maximal möglichen Zählerwert gesetzt.

Anschließend wird eine Abfrage 9 durchgeführt, mit welcher festgestellt wird, ob das elektrische Gerät 1 bereits über den begrenzten Zeitabschnitt aktiviert war. Ist dies der Fall beziehungsweise wurde das Aktivieren des elektrischen Geräts 1 nicht zugelassen, so wird entlang eines Pfads 10 verfahren und die Abfrage 6 erneut durchgeführt. Ist dagegen das elektrische Gerät 1 noch aktiviert, also der begrenzten Zeitabschnitt noch nicht abgelaufen, so wird gemäß einem Pfad 11 verfahren und die Abfrage 9 erneut durchgeführt.

Die Figur 3 zeigt eine schematische Darstellung einer weiteren Berechnungsvorschrift des Verfahrens. Die Berechnungsvorschrift betrifft das Dekrementieren des Zählerwerts mit der bestimmten Dekrementierrate. Die Berechnungsvorschrift beginnt mit einem Start 12. Nachfolgend des Starts 12 wird eine Abfrage 13 durchgeführt. Mit dieser wird überprüft, ob eine von der Dekrementierrate spezifizierte Zeit bereits gestrichen ist. Ist dies nicht der Fall, so wird entlang eines Pfades 14 verfahren und die Abfrage 13 erneut durchgeführt. Ist die von der Dekrementierrate spezifizierte Zeit verstrichen, so wird ein Befehl 15 ausgeführt. Dabei wird der Zählerwert um einen vorbestimmten Wert, insbesondere 1, dekrementiert.

Bevorzugterweise wird dabei der Wertebereich des Zählerwerts beachtet, um das vorstehend beschriebene Überlaufen zu verhindern. Zu diesem Zweck wird beispielsweise überprüft, ob der Zähler größer als der vorbestimmte Wert beziehungsweise größer als der minimal mögliche Zählerwert zuzüglich des vorbestimmten Werts ist. Ist dies der Fall, so wird der vorbestimmte Wert von dem Zählerwert abgezogen. Ansonsten wird der Zählerwert gleich Null beziehungsweise auf den minimal möglichen Zählerwert gesetzt. Anschließend wird entsprechend eines Pfades 16 die Abfrage 13 erneut durchgeführt. Die in der Figur 3 dargestellte Berechnungsvorschrift wird kontinuierlich durchgeführt, insbesondere während das elektrische Gerät 1 nicht aktiviert ist. Somit wird ein Abkühlen des elektrischen Geräts 1 abgebildet.

Die Figur 4 zeigt eine schematische Darstellung einer Auswertung des Zählerwerts. Dabei ist ein Start 17 vorgesehen. Die Auswertung weist zwei Zustände 18 und 19 auf. In dem ersten Zustand 18 ist ein Aktivieren des elektrischen Geräts 1 zugelassen, während in dem Zustand 19 das Aktivieren nicht zugelassen ist. Nach dem Start 17 ist zunächst der Zustand 18 aktiv. Übersteigt der Zählerwert jedoch einen Maximalwert, so wird der Zustand 18 deaktiviert und der Zustand 19 aktiviert. Im Folgenden ist demnach das Aktivieren des elektrischen Geräts 1 auch bei Auftreten des Aktivierungssignals nicht zugelassen. Der Wechsel zwischen den Zuständen 18 und 19 ist durch den Pfeil 20 angedeutet. Ist der Zustand 19 aktiv und unterschreitet der Zählerwert einen Minimalwert, so wird der Zustand 18 aktiviert und der Zustand 19 deaktiviert. Dies ist durch den Pfeil 21 dargestellt. Im Folgenden ist somit wieder das Aktivieren des elektrischen Geräts 1 bei Auftreten des Aktivierungssignals zugelassen.

In anderen Worten wird der Referenzwert nach dem Start 17 zunächst auf einen ersten Referenzwert gesetzt. Überschreitet der Zählerwert nachfolgend den Maximalwert, so wird der Referenzwert auf einen zweiten Referenzwert gesetzt, welcher kleiner ist als der erste Referenzwert. Erst bei einem Unterschreiten eines Minimalwerts durch den Zählerwert wird der Referenzwert erneut auf den ersten Referenzwert gesetzt. Dabei entspricht mit Vorteil der erste Referenzwert dem Maximalwert und der zweite Referenzwert dem Minimalwert. Auf diese Weise wird ein hystereseartiges Verhalten der Temperaturbegrenzungseinrichtung 2 erzielt.

## Patentansprüche

1. Verfahren zum Betreiben einer Temperaturbegrenzungseinrichtung (2) eines mittels eines Aktivierungssignals über einen begrenzten Zeitabschnitt aktivierbaren elektrischen Geräts, wobei die Temperaturbegrenzungseinrichtung das Aktivieren des elektrischen Geräts (1) bei Auftreten des Aktivierungssignals nur zulässt, wenn ein Zählerwert kleiner als ein Referenzwert ist, wobei der Zählerwert mit einer bestimmten Änderungsrate dekrementiert und bei jedem Aktivieren des elektrischen Geräts (1) nur einmalig mit einem bestimmten Temperaturäquivalenzwert inkrementiert wird, **dadurch gekennzeichnet, dass** der Referenzwert bei einem Unterschreiten eines Minimalwerts durch den Zählerwert auf einen ersten Referenzwert und bei einem Überschreiten eines Maximalwerts durch den Zählerwert auf einen zweiten Referenzwert gesetzt, wobei der zweite Referenzwert kleiner ist als der erste Referenzwert, und wobei der Minimalwert dem zweiten Referenzwert und der Maximalwert dem ersten Referenzwert entspricht.

2. Verfahren zum Betreiben einer Temperaturbegrenzungseinrichtung (2) eines Mittels eines Aktivierungssignals über einen begrenzten Zeitabschnitt aktivierbaren elektrischen Geräts (1), wobei die Temperaturbegrenzungseinrichtung das Aktivieren des elektrischen Geräts (1) bei Auftreten des Aktivierungssignals nur zulässt, wenn ein Zählerwert größer als ein Referenzwert ist, wobei der Zählerwert mit einer bestimmten Änderungsrate inkrementiert und bei jedem Aktivieren des elektrischen Geräts (1) nur einmalig mit einem bestimmten Temperaturäquivalenzwert dekrementiert wird, **dadurch gekennzeichnet, dass** der Referenzwert bei einem Überschreiten eines Maximalwerts auf einen ersten Referenzwert und bei einem Unterschreiten eines Minimalwerts durch den Zählerwert auf einen zweiten Referenzwert gesetzt wird, wobei der zweite Referenzwert größer ist als der erste Referenzwert, und wobei der Maximalwert gleich dem zweiten Referenzwert und der Minimalwert gleich dem ersten Referenzwert ist.

3. Verfahren nach einem der vorhergehenden Ansprüche, **dadurch gekennzeichnet, dass** der Temperaturäquivalenzwert einer durch das Aktivieren des elektrischen Geräts (1) erzeugten, insbesondere mittleren, Temperaturerhöhung des elektrischen Geräts und/oder die Änderungsrate einer Abkühlrate des elektrischen Geräts (1) im Wesentlichen entsprechen.

4. Verfahren nach einem der vorhergehenden Ansprüche, **dadurch gekennzeichnet, dass** der Temperaturäquivalenzwert, die Änderungsrate und/oder der Referenzwert in Abhängigkeit von zumindest einer, insbesondere gemessenen, Umgebungszustandsgröße und/oder eines Fahrzustands bestimmt werden.

5. Verfahren nach einem der vorhergehenden Ansprüche, **dadurch gekennzeichnet, dass** als elektrisches Gerät (1) eine Starteinrichtung eines Kraftfahrzeugs, insbesondere ein Startergenerator, verwendet wird.

6. Temperaturbegrenzungseinrichtung (2) zur Durchführung des Verfahrens nach einem oder mehreren der vorhergehenden Ansprüche, eines mittels eines Aktivierungssignals über einen begrenzten Zeitabschnitt aktivierbaren elektrischen Geräts (1), wobei die Temperaturbegrenzungseinrichtung das Aktivieren des elektrischen Geräts (1) bei Auftreten des Aktivierungssignals nur zulässt, wenn ein Zählerwert größer als ein Referenzwert ist, wobei die Temperaturbegrenzungseinrichtung (2) den Zählerwert mit einer bestimmten Änderungsrate dekrementiert und bei jedem Aktivieren des elektrischen Geräts (1) nur einmalig mit einem bestimmten Temperaturäquivalenzwert inkrementiert, **dadurch gekennzeichnet, dass** die Temperaturbegrenzungseinrichtung den Referenzwert bei einem Unterschreiten eines Minimalwerts durch den Zählerwert auf einen ersten Referenzwert und bei einem Überschreiten eines Maximalwerts durch den Zählerwert auf einen zweiten Referenzwert setzt, wobei der zweite Referenzwert kleiner ist als der erste Referenzwert, und wobei der Minimalwert gleich dem zweiten Referenzwert und der Maximalwert gleich dem ersten Referenzwert ist.

7. Temperaturbegrenzungseinrichtung (2) zur Durchführung des Verfahrens nach einem oder mehreren der vorhergehenden Ansprüche, eines Mittels eines Aktivierungssignals über einen begrenzten Zeitabschnitt aktivierbaren elektrischen Geräts (1), wobei die Temperaturbegrenzungseinrichtung (2) das Aktivieren des elektrischen Geräts (1) bei Auftreten des Aktivierungssignals nur zulässt, wenn ein Zählerwert kleiner als ein Referenzwert ist, wobei die Temperaturbegrenzungseinrichtung (2) den Zählerwert mit einer bestimmten Änderungsrate inkrementiert und bei jedem Aktivieren des elektrischen Geräts (1) nur einmalig mit einem bestimmten Temperaturäquivalenzwert dekrementiert, **dadurch gekennzeichnet, dass** die Temperaturbegrenzungseinrichtung (2) den Referenzwert bei einem Überschreiten eines Maximalwerts durch den Zählerwert auf einen ersten Referenzwert und bei einem Unterschreiten eines Minimalwerts durch den Zählerwert auf einen zweiten Referenzwert setzt, wobei der zweite Referenzwert größer ist als der erste Referenzwert, und wobei der Maximalwert gleich dem zweiten Referenzwert und der Minimalwert gleich dem ersten Referenzwert ist.

8. Elektrisches Gerät (1), insbesondere Startereinrichtung eines Kraftfahrzeugs, mit einer Temperaturbegrenzungseinrichtung (2) gemäß einem der Ansprüche 6 und 7.

## Claims

1. Method for operating a temperature limiting device (2) of an electrical apparatus which can be activated over a limited time period by means of an activation signal, wherein the temperature limiting device permits the electrical apparatus (1) to be activated when the activation signal occurs only if a counter value is lower than a reference value, wherein the counter value is decremented with a specific rate of change, and whenever the electrical apparatus (1) is activated it is incremented only once with a specific temperature equivalent value, **characterized in that** when a minimum value is undershot by the counter value the reference value is set to a first reference value, and when a maximum value is exceeded by the counter value it is set to a second reference value, wherein the second reference value is lower than the first reference value, and wherein the minimum value corresponds to the second reference value, and the maximum value corresponds to the first reference value.

2. Method for operating a temperature limiting device (2) of an electrical apparatus (1) which can be activated over a limited time period by means of an activation signal, wherein the temperature limiting device permits the electrical apparatus (1) to be activated when the activation signal occurs only if a counter value is higher than a reference value, wherein the counter value is incremented with a specific rate of change, and whenever the electrical apparatus (1) is activated it is decremented only once with a specific temperature equivalent value, **characterized in that** when a maximum value is exceeded the reference value is set to a first reference value, and when a minimum value is undershot it is set to a second reference value by the counter value, wherein the second reference value is higher than the first reference value, and wherein the maximum value is equal to the second reference value, and the minimum value is equal to the first reference value.

3. Method according to one of the preceding claims, **characterized in that** the temperature equivalent value corresponds essentially to a temperature increase of the electrical apparatus which is generated by the activation of the electrical apparatus (1) and is, in particular, an average temperature increase, and/or the rate of change corresponds essentially to a cooling rate of the electrical apparatus (1).

4. Method according to one of the preceding claims, **characterized in that** the temperature equivalent value, the rate of change and/or the reference value are determined as a function of at least one, in particular measured, ambient state variable and/or a driving state.

5. Method according to one of the preceding claims, **characterized in that** a starter device of a motor vehicle, in particular a starter generator, is used as an electrical apparatus (1).

6. Temperature limiting device (2) for carrying out the method according to one or more of the preceding claims, of an electrical apparatus (1) which can be activated over a limited time period by means of an activation signal, wherein the temperature limiting device permits the electrical apparatus (1) to be activated when the activation signal occurs only if a counter value is higher than a reference value, wherein the temperature limiting device (2) decrements the counter value with a specific rate of change, and whenever the electrical apparatus (1) is activated said temperature limiting device (2) increments the counter value only once with a specific temperature equivalent value, **characterized in that** when a minimum value is undershot by the counter value the temperature limiting device sets the reference value to a first reference value, and when a maximum value is exceeded by the counter value it sets the reference value to a second reference value, wherein the second reference value is lower than the first reference value, and wherein the minimum value is equal to the second reference value, and the maximum value is equal to the first reference value.

7. Temperature limiting device (2) for carrying out the method according to one or more of the preceding claims, of an electrical apparatus (1) which can be activated over a limited time period by means of an activation signal, wherein the temperature limiting device (2) permits the electrical apparatus (1) to be activated when the activation signal occurs only if a counter value is lower than a reference value, wherein the temperature limiting device (2) increments the counter value with a specific rate of change, and whenever the electrical apparatus (1) is activated said temperature limiting device (2) decrements the counter value only once with a specific temperature equivalent value, **characterized in that** when a maximum value is exceeded by the counter value the temperature limiting device (2) sets the reference value to a first reference value, and when a minimum value is undershot by the counter value, the temperature limiting device (2) sets the reference value to a second reference value, wherein the second reference value is higher than the first reference value, and wherein the maximum value is equal to the second reference value, and the minimum value is equal to the first reference value.

8. Electrical apparatus (1), in particular starter device of a motor vehicle, having a temperature limiting device (2) according to one of Claims 6 and 7.

## Revendications

1. Procédé pour faire fonctionner un dispositif de limitation de température (2) d'un appareil électrique qui peut être activé pendant une période limitée au moyen d'un signal d'activation,
le dispositif de limitation de température n'autorisant l'activation de l'appareil électrique (1) en cas de survenance du signal d'activation que si une valeur de compteur est inférieure à une valeur de référence, la valeur de compteur étant décrémentée avec un taux de variation donné et n'étant incrémentée qu'une seule fois avec une valeur d'équivalence de température donnée à chaque activation de l'appareil électrique (1), **caractérisé en ce que** la valeur de référence est fixée à une première valeur de référence dans le cas où la valeur du compteur devient inférieure à une valeur minimale et à une deuxième valeur de référence dans le cas où la valeur du compteur devient supérieure à une valeur maximale, la deuxième valeur de référence étant inférieure à la première valeur de référence et la valeur minimale correspondant à la deuxième valeur de référence et la valeur maximale à la première valeur de référence.

2. Procédé pour faire fonctionner un dispositif de limitation de température (2) d'un appareil électrique (1) qui peut être activé pendant une période limitée au moyen d'un signal d'activation,
le dispositif de limitation de température n'autorisant l'activation de l'appareil électrique (1) en cas de survenance du signal d'activation que si une valeur de compteur est supérieure à une valeur de référence, la valeur de compteur étant incrémentée avec un taux de variation donné et n'étant décrémentée qu'une seule fois avec une valeur d'équivalence de température donnée à chaque activation de l'appareil électrique (1), **caractérisé en ce que** la valeur de référence est fixée à une première valeur de référence dans le cas où la valeur du compteur devient supérieure à une valeur maximale et à une deuxième valeur de référence dans le cas où la valeur du compteur devient inférieure à une valeur minimale, la deuxième valeur de référence étant supérieure à la première valeur de référence et la valeur maximale étant égale à la deuxième valeur de référence et la valeur minimale égale à la première valeur de référence.

3. Procédé selon l'une des revendications précédentes, **caractérisé en ce que** la valeur d'équivalence de température correspond sensiblement à une augmentation de la température de l'appareil électrique, notamment moyenne, produite par l'activation de l'appareil électrique (1) et/ou le taux de variation à un taux de refroidissement de l'appareil électrique (1).

4. Procédé selon l'une des revendications précédentes, **caractérisé en ce que** la valeur d'équivalence de température, le taux de variation et/ou la valeur de référence sont définis en fonction d'au moins une grandeur d'état environnementale, notamment mesurée, et/ou d'un état de conduite.

5. Procédé selon l'une des revendications précédentes, **caractérisé en ce que** l'appareil électrique (1) utilisé est un dispositif de démarrage d'un véhicule automobile, notamment un générateur de démarrage.

6. Dispositif de limitation de température (2) destiné à mettre en oeuvre un procédé selon l'une ou plusieurs des revendications précédentes, d'un appareil électrique (1) qui peut être activé pendant une période limitée au moyen d'un signal d'activation, le dispositif de limitation de température n'autorisant l'activation de l'appareil électrique (1) en cas de survenance du signal d'activation que si une valeur de compteur est supérieure à une valeur de référence, le dispositif de limitation de température (2) décrémentant la valeur de compteur avec un taux de variation donné et ne l'incrémentant qu'une seule fois avec une valeur d'équivalence de température donnée à chaque activation de l'appareil électrique (1), **caractérisé en ce que** le dispositif de limitation de température fixe la valeur de référence à une première valeur de référence dans le cas où la valeur du compteur devient inférieure à une valeur minimale et à une deuxième valeur de référence dans le cas où la valeur du compteur devient supérieure à une valeur maximale, la deuxième valeur de référence étant inférieure à la première valeur de référence et la valeur minimale étant égale à la deuxième valeur de référence et la valeur maximale égale à la première valeur de référence.

7. Dispositif de limitation de température (2) destiné à mettre en oeuvre un procédé selon l'une ou plusieurs des revendications précédentes, d'un appareil électrique (1) qui peut être activé pendant une période limitée au moyen d'un signal d'activation, le dispositif de limitation de température (2) n'autorisant l'activation de l'appareil électrique (1) en cas de survenance du signal d'activation que si une valeur de compteur est inférieure à une valeur de référence, le dispositif de limitation de température (2) incrémentant la valeur de compteur avec un taux de variation donné et ne la décrémentant qu'une seule fois avec une valeur d'équivalence de température donnée à chaque activation de l'appareil électrique (1), **caractérisé en ce que** le dispositif de limitation de température (2) fixe la valeur de référence à une première valeur de référence dans le cas où la valeur du compteur devient supérieure à une valeur maximale et à une deuxième valeur de référence dans le cas où la valeur du compteur devient inférieure à une valeur minimale, la deuxième valeur de référence étant supérieure à la première valeur de référence et la valeur maximale étant égale à la deuxième valeur de référence et la valeur minimale égale à la première valeur de référence.

8. Appareil électrique (1), notamment dispositif de démarrage d'un véhicule automobile, comprenant un dispositif de limitation de température (2) selon l'une des revendications 6 et 7.
